# EUROPEAN PATENT SPECIFICATION

(11) **EP 3 003 100 B1**
(45) Date of publication and mention of the grant of the patent: **16.08.2017**
(21) Application number: 14723832.3
(22) Date of filing: 15.05.2014
(51) Int. Cl.: A47J 31/40

(54) **BEVERAGE MIXING DEVICE**
GETRÄNKEMISCHVORRICHTUNG
DISPOSITIF DE MÉLANGE DE BOISSON

(30) Priority: 29.05.2013 EP 13169609
(43) Date of publication of application: 13.04.2016
(73) Proprietor: Nestec S.A., 1800 Vevey (CH)
(72) Inventor: MIEVILLE, Yann, 1405 Pomy (CH); BEAUSIRE, Cédric, 1372 Bavois (CH)
(74) Representative: Ducreux, Marie
(86) International application number: PCT/EP2014/059964
(87) International publication number: WO 2014/191218

(56) References cited:
- EP-A1- 0 843 983
- EP-A1- 2 237 407
- WO-A1-2009/144239
- WO-A1-2012/049265

## Description

The present invention relates a beverage production apparatus and to a beverage production method.

From the state of the art (see for example WO 2009/144239 A1) a beverage production apparatus is known, which is configured to produce a beverage by dosing a beverage soluble ingredient and mixing it inside a mixing chamber with a diluent. The mixing chamber can be moved between a mixing position and a dosing position. In the dosing position a dosing unit is operated to provide the dose of the beverage soluble ingredient into the mixing chamber. The movement is controlled by a motor of the dosing unit, and is supported by a slider presenting side grooves, in which corresponding rims on the lateral sides of the mixing chamber can slide. A lever enables the locking of the mixing chamber in the slider. By unlocking the lever and having the mixing chamber slide in the slider until the end of the side grooves, the mixing chamber can be removed from the beverage preparation apparatus, in order to clean it.

However, it has been observed that during beverage preparation in such an apparatus, not only the mixing chamber but also the internal parts of the beverage production apparatus around the mixing chamber are potentially dirtied. In particular, when a dose of the beverage soluble ingredient is introduced into the mixing chamber, powder fines and water projections may escape from the mixing chamber and deposit on the slider and on parts of the beverage production apparatus above the mixing chamber. The deposits on the slider grooves can create residues that block the movement of the mixing chamber in the slider. The blocking can be such that the apparatus must be sent to maintenance for removing the deposits.

In view of the above disadvantages, it is an object of the present invention to improve the state of the art. In particular, it is an object of the present invention to provide a beverage production apparatus that cannot be totally blocked by dirtiness as far as repairing is needed. Further, the present invention aims to avoid that a beverage production apparatus has to be returned to maintenance for unblocking the mixing chamber.

The solution to the above-mentioned objects is achieved by the independent claims of the present invention. A general idea of the present invention is thereby to measure the current of the motor that actuates the movement of the mixing chamber to detect the presence of dirtiness and requests that the user cleans the machine.

In particular, the present invention is firstly directed to a beverage production apparatus comprising :
- a mixing chamber for producing a beverage from a soluble beverage ingredient and a liquid,
- a slider for supporting the mixing chamber and moving the mixing chamber between a metering position wherein a beverage ingredient is delivered in the mixing chamber and a mixing position wherein the delivered beverage ingredient is mixed with a diluent,
- a chamber receiving area for receiving the mixing chamber, wherein the chamber receiving area and the slider comprise cooperating means for sliding the slider in respect to the chamber receiving area,
- a motor for operating the movement of the slider between the metering and the mixing positions,
wherein the apparatus comprises :
- a current sensing unit for measuring the current of the motor and comparing the measured current with a predetermined threshold value, and
- a warning unit for issuing a warning signal, when the measured current exceeds the predetermined threshold value.

Preferably the warning signal requests a cleaning operation of the apparatus.

Preferably the cooperating means for sliding the slider in respect to the chamber receiving area comprise rims and grooves. In the present invention the chamber receiving area corresponds to the space in which the mixing chamber is positioned when the apparatus is ready for operation. Preferably the mixing chamber is selectively removable from this area, in particular for cleaning. Preferably all parts of the beverage production apparatus that may be contaminated with the soluble beverage ingredient, the liquid or the mixed beverage can be easily dismounted from the apparatus, and can thus be cleaned comfortably and thoroughly. Then preferably the chamber receiving area is removable from the beverage production apparatus.

Preferably the apparatus comprises a dosing unit for delivering a dose of soluble beverage ingredient from an ingredient container into the mixing chamber and wherein the motor for operating the movement of the slider also operates the dosing unit.

Preferably when the slider of the chamber receiving area is moved by the motor into the dosing position, the dosing unit is opened by the motor.

As an example such a movable chamber is illustrated in WO 2009/144239.

The current and sensing units of the apparatus of the present invention are configured for alerting the operator of the machine that residues are present in the cooperating means between the slider and the chambers receiving area and that these residues prevent a correct sliding movement of the slider that could lead to a further full blocking of the movement. The warning unit indicates to the operator that a cleaning is necessary Therefore, the mixing chamber can be removed from the apparatus for cleaning and in particular for cleaning the cooperating means between the slider and the chamber receiving area. When the mixing chamber receiving area is removable from the apparatus all these parts can be comfortably cleaned as well. All removable parts can even be washed in a dish washer or the like.

The beverage production apparatus further comprises a current sensing unit for measuring the current of the motor and comparing the measured current with a predetermined threshold value, and a warning unit for issuing a warning signal, when the measured current exceeds the predetermined threshold value.

The measured current corresponds to the force, which the motor has to overcome to move the second part together with the mixing chamber. If said force increases, there is a high likelihood that the guiding means for the movement, which are preferably constructed as rims and grooves, are blocked by residues or other contaminants. To avoid such blockage, the beverage production apparatus is able to provide the user with a warning beforehand. Thus, the beverage production apparatus requires less maintenance.

According to a second aspect the invention also concerns a beverage production method comprising the steps of:
- moving a mixing chamber for producing a beverage from a soluble ingredient and a diluent by a motor into a dosing position to provide the soluble ingredient and then into a beverage production position to provide the liquid,
- measuring the current of the motor and comparing the measured current with a predetermined threshold value, and
- issuing a warning signal, when the measured current exceeds the predetermined threshold value.

The present invention will now be described in more detail with respect to the attached drawings.
- Fig. 1: shows a schematic illustration of a beverage production apparatus of the present invention.
- Fig. 2: shows a dosing unit and a beverage mixing unit of a beverage production apparatus of the present invention.
- Fig. 3: shows the dosing unit and the beverage mixing unit from which the mixing chamber has been removed
- Fig. 4: is an isolated view of the slider of the chamber-receiving area of Figure 3.
- Fig. 5: is an isolated view of the chamber removed from the dosing and beverage mixing units of Figure 2.
- Fig. 6: shows a side view of the dosing unit and the beverage mixing device of the beverage production apparatus of the present invention.
- Fig. 7: shows a top perspective view of the dosing unit and the beverage mixing device of the beverage production apparatus of the present invention.
- Fig. 8: shows a bottom perspective view of the dosing unit and the beverage mixing device of the beverage production apparatus of the present invention.

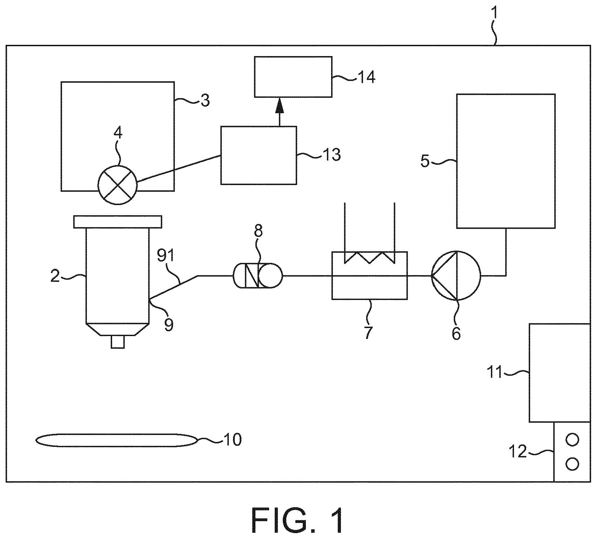

**Fig. 1** shows a beverage production apparatus 1 of the present invention. The beverage production apparatus 1 includes a mixing unit 2 comprising a mixing chamber for producing a beverage from a soluble ingredient and a diluent entering the mixing chamber. The beverage production apparatus 1 comprises further a reservoir or a tank 3 for the soluble ingredients, which is placed above the mixing unit 2, and is coupled with the dosing unit 4. The dosing unit 4 has the primary function to meter upon request doses of the ingredient into the mixing unit 2.

The ingredient reservoir 3 can be a hopper, which is permanent or can be a disposable package containing the soluble ingredient. The dosing unit 4 can be any suitable system such as a dosing screw, a reciprocating dosing piston or a rotating disc. Preferably, the dosing unit 4 may be designed like described above or according to WO 2009/144239 A1.

Upon request, the mixing unit 2 is fed with the ingredient from the dosing unit 4. Alternatively, the mixing unit 2 can also be fed manually. The feeding of the mixing unit 2 with the soluble ingredient can be prompted by a control unit 11, for example a micro-controller, and a command unit 12, for example, a user input device. It is to be noted that in the beverage production apparatus 1 the dosing unit 4 and the container 3 are optional.

The beverage production apparatus 1 of the present invention is preferably further provided with a liquid feeding circuit for feeding liquid via a liquid inlet 9 into the mixing chamber of the mixing unit 2, when positioned in the beverage production position. The feeding circuit is preferably provided with a liquid reservoir 5, which can be replenished, for example, with fresh water. Further, the feeding circuit comprises a water pump 6 for transporting the liquid from the reservoir 5 to preferably a water-heating system 7, which can be a thermo block or a cartridge-type heater. Preferably, the feeding circuit is also provided with a non-return valve 8. The pump 6 can be any type of pump, such as a piston pump, a diaphragm pump or a peristaltic pump. A tube 91 is preferably connected to the water inlet 9 of the mixing chamber of the mixing unit 2.

In the beverage production apparatus 1 of the present invention the mixing chamber 21 is preferably placed directly above a service tray 10, onto which a receptacle can be placed to receive a mixed and/or frothed beverage from the mixing chamber 21.

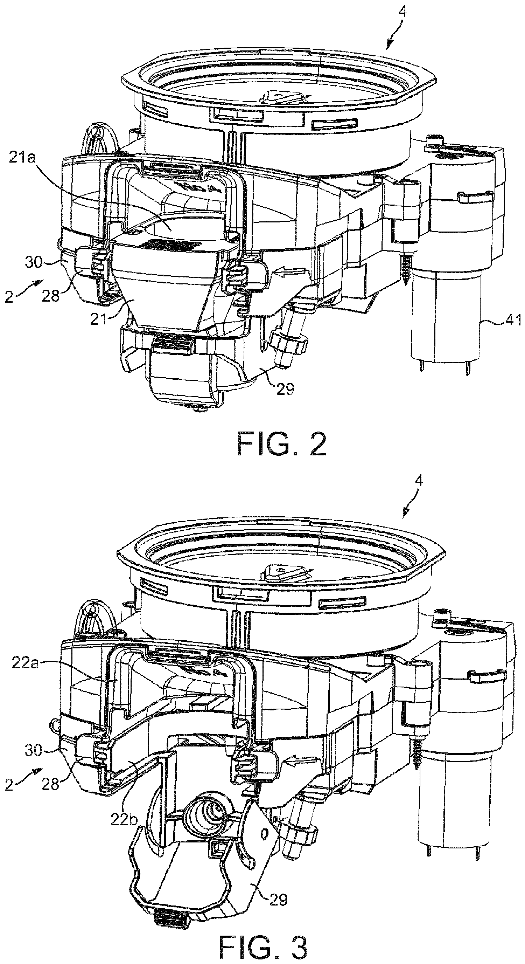

**Fig. 2** shows the beverage dosing and mixing units that are inserted into a beverage production apparatus 1 according to the present invention.

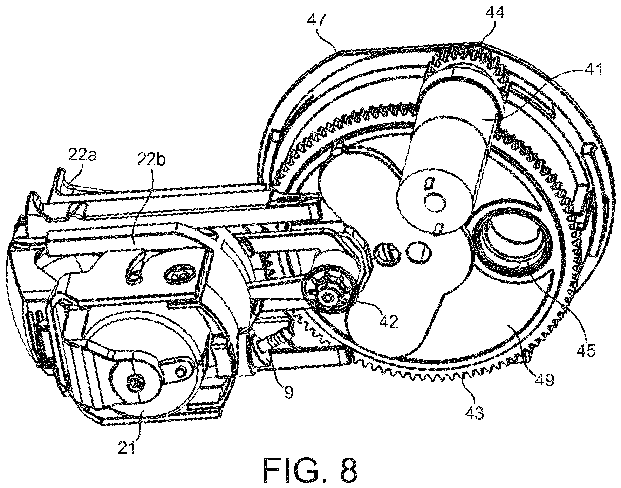

The dosing unit 4 is preferably configured to receive a beverage soluble ingredient from an ingredient tank or ingredient container 3 of the apparatus 1, which is preferably placed onto the dosing unit 4. The dosing unit 4 is preferably equipped with a motor 41. When the motor 41 is operated, the dosing unit 4 is preferably designed to rotate and thereby open or close a discharge aperture 45 (see Fig. 8) through which a dose of the soluble ingredient is discharged. The dosing unit 4 can be designed like the dosing device described and claimed in WO 2009/144239 A1 or as explained below in more detail.

The beverage mixing unit 2 shown in Fig. 2 comprises a mixing chamber 21, which is suitable for receiving the dose of the soluble ingredient provided by the dosing unit 4, and which is further suitable for receiving a liquid, in order to mix and optionally froth a beverage. The chamber presents a top opening 21a through which the dosing unit 4 can introduce a dose of beverage ingredient. The liquid is preferably received from a water tank 5 of the apparatus 1 via a liquid feeding circuit.

The beverage mixing unit 2 further comprises a chamber receiving area 22, which is configured for receiving and surrounding the mixing chamber 21. Fig. 2 shows further a lever 29, which can be operated by a user of the apparatus 1, in order to selectively lock the mixing chamber 21 in the chamber receiving area 22 or unlock the mixing chamber 21 so that it can be removed from the chamber receiving area 22. **Fig. 3** shows the beverage mixing unit 2 in a state where the mixing chamber 21 has been removed and making apparent the chamber-receiving area 22a, which surrounds the mixing chamber 21 during beverage production.

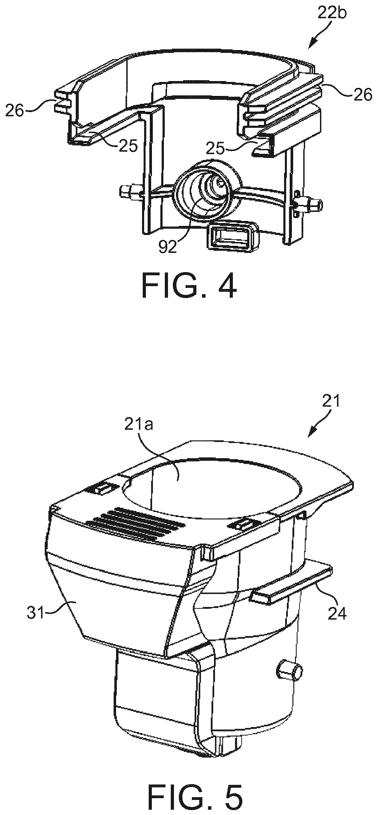

The beverage mixing unit 2 further comprises a slider 22b for receiving the mixing chamber 21. This slider 22b is movable in respect to the chamber receiving area 22a. That means, when the chamber receiving area 22a is fixed inside the beverage preparation apparatus 1, the slider 22b is movable inside the beverage preparation apparatus 1. As shown in **Fig. 4**, the movement of the slider 22b relative to the chamber receiving area 22a is made possible by cooperating means between these two parts, which are, for example, two or more rims 26 provided respectively on the two lateral external sides of the slide 22b, which slide in two or more grooves 27 respectively provided on the inside of the chamber receiving area 22. Contrary to the grooves 30 and rims 28 between the chamber receiving area 22a and the apparatus, the grooves 27 and rims 26 shall not be fixed e.g. by friction so that the slider is free to move back and forth inside the grooves 27.

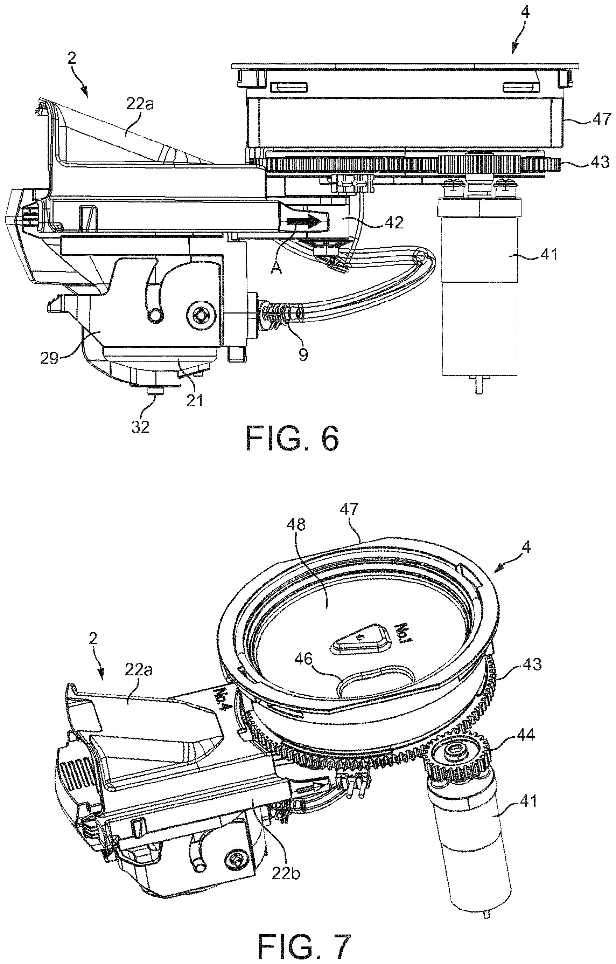

The slider 22b of the chamber-receiving is further equipped with means for receiving the mixing chamber 21. As shown in **Fig. 5**, these means can be realized by grooves 25, which are provided on opposite inner sides and are designed to cooperate with the rims 24 on the lateral external sides of the mixing chamber 21 as shown in Fig. 7. The rims 24 of the mixing chamber 21 can slide in the grooves 25 of the slider 22b. Again, the rims 24 and grooves 25 can be exchanged with another, so that the mixing chamber 21 may be provided with grooves, whereas the slider 22b may be provided with rims.

The mixing chamber 21 shown in **Fig. 5** can be inserted into the chamber receiving area 22a of the mixing unit 2 of Fig. 3, and can be locked with the above-described lever 29. When the mixing chamber 21 is inserted into the chamber receiving area 22, it is supported by the slider 22b. The relative movement of the slider 22b in respect to the chamber receiving area 22a, which is fixed inside the beverage production apparatus 1, is laid out such that the mixing chamber 21 supported by the slider 22b can be moved from a mixing position into a dosing position. In the dosing position the mixing chamber 21 is positioned such that when the dosing unit 4 provides a dose of the soluble ingredient, the dose is received by the mixing chamber 21. In the beverage production position the mixing chamber 21 is preferably positioned distanced from the dosing unit 4, in order to receive the liquid or other diluent separately from the soluble ingredients. The mixing chamber 21 is provided with a liquid inlet and optionally with mixing and/or frothing means for mixing and/or frothing a beverage. The mixing chamber is preferably further provided with a grip like structure 31 on its outer surface, in order to facilitate its removal from the apparatus 1 by the user. The grip like structure may be designed to work together with the lever 29.

**Fig. 6** shows side view of the beverage mixing and dosing units 2, 4. In particular, Fig. 6 shows the movement of the slider 22b of the chamber-receiving area 22, together with the mixing chamber 21 in respect to the fixed chamber receiving area 22a during a dosing operation. Fig. 6 shows the mixing chamber 21 in a beverage production position. In this position the liquid can be inserted via a liquid inlet 9 into the mixing chamber 21 which creates a jet that mixes and froths the beverage in the mixing chamber 21. The mixing chamber 21 is also provided with an outlet 32 for outputting the produced beverage.

The arrow A in Fig. 6 shows the direction, along which the mixing chamber 21 can be moved while it is supported by the slider 22b. The mixing chamber 21 can be moved into a dosing position, in which it can receive a dose of the soluble ingredient from the dosing unit 4. The movement from the mixing position to the dosing position is caused by the motor 41 of the dosing unit 4. In particular, the motor 41 preferably rotates a gear wheel 43 of the dosing unit 4, which again acts on means 42, which translate the rotation into a translational relative movement of the slider 22b in respect to the chamber receiving area 22a. Thereby, also the mixing unit 21 is moved. The means 42 can be designed as a connecting rod, which connects the movable slider 22b with the gear wheel 43 and comprises a rotatable extremity that is attached to the gear wheel 43. When the gear wheel 43 is rotated, the connecting rod 42 pulls the second part 23 and the mixing chamber in direction of the dosing unit 4. As shown in Fig. 8 the connecting rod 42 is preferably positioned within a notch provided in the slider 22b, so that it can swivel while its rotatable extremity rotates, in order to follow the rotational movement of the gear wheel 43.

The gear mechanism of the dosing unit 4 is preferably configured such, that when the motor 41 is operated to rotate the gear wheel 43, the mixing chamber 21 supported by the slider 22b is moved from the beverage production position to the dosing position, while at the same time the dosing unit 4 is rotated to its open state, for example, as described in WO 2009/144239 A1. That means that the motor 41 of the dosing unit is preferably used for rotating the dosing unit 4 and indirectly for translating the mixing chamber 21 via the slider 22b.

**Figs. 7** **and** **8** show perspective top and bottom views of the beverage mixing unit 2 and of the dosing unit 4. It can be seen that a gear wheel 44 is rotated, when the motor 41 is operated, and the gear wheel 44 rotates the gear wheel 43 with which it is engaged. By means of rotating the gear wheel 43, the dosing unit 4 is rotated such that an opening 45 is opened. Further, the rotation of the gear wheel 43 causes a translational movement of the slider 22b, due to the means 42 described above. Thereby, the mixing chamber 21 is brought into its dosing position, in which the opening 45 of the dosing unit 4 emerges in a mixing chamber inlet. To the contrary, in the beverage production position, the opening 45 is firstly closed, and secondly distanced from the mixing chamber 21.

Preferably, the dosing unit 4 comprises a body 47 made of at least a disc presenting a single aperture. Further, a rotary top disc 48 is preferably disposed on the top of the fixed body 47, and presents an aperture 46 used for receiving the soluble ingredients from the ingredient container 3 cooperating with rotary top disc 48. The dosing unit 4 further comprises a rotary bottom disc 49, which is disposed on the bottom of the body 47 and presents the aperture 45 used for discharging a dose of the soluble ingredients into the mixing chamber 21. The dosing unit further has a rotary shaft connecting the bottom disc 49 and the top disc 48 and allowing rotation in respect to each other.

Coming back to **Fig. 1**, the beverage production apparatus 1 comprises a current sensor 13, which is preferably connected to the motor 41 of the dosing unit 4. The current sensor 13 is configured to measure an operating current of the motor 41. As described above, the dosing unit 4 can be designed such that the motor 41 not only activates the dosing unit 4, but also indirectly translates the mixing chamber 21 between its mixing position and its dosing position. Thereby, the mixing chamber 21 is moved while being supported by the slider 22b in respect to the fixed chamber receiving area 22a, preferably guided by rims and grooves. The rims and grooves can be blocked by residues or other deposits. If this is the case, the motor 41 will have to exert a stronger force to move the slider 22b and the mixing chamber 21. That means the required current exceeds its nominal value. Therefore, the current sensor 13 is preferably configured to compare the operating current of the motor 51 with a predetermined threshold value. In case the current exceeds the predetermined threshold value, the current sensing device 13 is configured to interpret the exceeding current as a sign that blocking residues are present inside the beverage preparation apparatus 1. In this case, the current sensing unit 13 can provide a signal to a warning unit 14, which then can issue a warning signal, preferably alerting lights that can be perceived by the user.

The method of measuring the current of the motor 41 during operation of the beverage production apparatus 1 prevents that the movement of the slider 22b against the chamber receiving area 22a, and thus the movement of the mixing chamber 21 between the dosing position and the mixing position becomes blocked and the beverage production apparatus 1 has to be returned to maintenance.

## Claims

1. Beverage production apparatus (1), comprising:
- a mixing chamber (21) for producing a beverage from a soluble beverage ingredient and a liquid,
- a slider (22b) for supporting the mixing chamber (21) and moving the mixing chamber (21) between a metering position wherein a beverage ingredient is delivered in the mixing chamber and a mixing position wherein the delivered beverage ingredient is mixed with a diluent,
- a chamber receiving area (22a) for receiving the mixing chamber (21), wherein the chamber receiving area (22) and the slider (22b) comprise cooperating means for sliding the slider (22b) in respect to the chamber receiving area (22a),
- a motor (41) for operating the movement of the slider between the metering and the mixing positions,
wherein the apparatus comprises :
- a current sensing unit (13) for measuring the current of the motor (41) and comparing the measured current with a predetermined threshold value, and
- a warning unit (14) for issuing a warning signal, when the measured current exceeds the predetermined threshold value.

2. Beverage production apparatus according to Claim 1 wherein the warning signal requests a cleaning operation of the apparatus.

3. Beverage production apparatus according to Claim 1 or 2, wherein the cooperating means for sliding the slider (22b) in respect to the chamber receiving area (22a) comprise rims (26) and grooves (27).

4. Beverage production apparatus (1) according to any one of the precedent claims, wherein the chamber receiving area (22a) is removable from the beverage production apparatus (1).

5. Beverage production apparatus (1) according to any one of the precedent claims, further comprising a dosing unit (4) for delivering a dose of soluble beverage ingredient from an ingredient container (3) into the mixing chamber (21) and wherein the motor (41) for operating the movement of the slider also operates the dosing unit (4).

6. Beverage production apparatus (1) according to claim 5, wherein, when the slider (22b) of the chamber receiving area is moved by the motor (41) into the dosing position, the dosing unit (4) is opened by the motor (41).

7. Beverage production method comprising the steps of :
- moving a mixing chamber (21) for producing a beverage from a soluble ingredient and a diluent by a motor (41) into a dosing position to provide the soluble ingredient and then into a beverage production position to provide the liquid,
- measuring the current of the motor (41) and comparing the measured current with a predetermined threshold value, and
- issuing a warning signal, when the measured current exceeds the predetermined threshold value.

## Patentansprüche

1. Getränkeherstellungsvorrichtung (1), umfassend:
- eine Mischkammer (21) zur Herstellung eines Getränks aus einer löslichen Getränkezutat und einer Flüssigkeit,
- einen Schlitten (22b) zum Tragen der Mischkammer (21) und zum Bewegen der Mischkammer (21) zwischen einer Zumessposition, bei der eine Getränkezutat in die Mischkammer abgegeben wird, und einer Mischposition, in der die abgegebene Getränkezutat mit einem Verdünnungsmittel gemischt wird,
- einen Kammeraufnahmebereich (22a) zum Aufnehmen der Mischkammer (21), wobei der Kammeraufnahmebereich (22) und der Schlitten (22b) zusammenwirkende Mittel umfassen, um den Schlitten (22b) in Bezug auf den Kammeraufnahmebereich (22a) zu verschieben,
- einen Motor (41), um die Bewegung des Schlittens zwischen der Dosier- und der Mischposition zu bewirken,
wobei die Vorrichtung umfasst:
- eine Stromfühlereinheit (13) zum Messen des Stroms des Motors (41) und zum Vergleichen des gemessenen Stroms mit einem vorgegebenen Schwellenwert, und
- eine Warneinheit (14) zum Ausgeben eines Warnsignals, wenn der gemessene Strom den vorgegebenen Schwellenwert überschreitet.

2. Getränkeherstellungsvorrichtung nach Anspruch 1, wobei das Warnsignal eine Reinigungsbehandlung der Vorrichtung verlangt.

3. Getränkeherstellungsvorrichtung nach Anspruch 1 oder 2, wobei die zusammenwirkenden Mittel zum Verschieben des Schlittens (22b) in Bezug auf den Kammeraufnahmebereich (22a) Vorsprünge (26) und Vertiefungen (27) umfassen.

4. Getränkeherstellungsvorrichtung (1) nach einem der vorangehenden Ansprüche, wobei der Kammeraufnahmebereich (22a) aus der Getränkeherstellungsvorrichtung (1) entfernbar ist.

5. Getränkeherstellungsvorrichtung (1) nach einem der vorangehenden Ansprüche, ferner eine Dosiereinheit (4) zum Abgeben einer Dosis einer löslichen Getränkezutat aus einem Zutatenbehälter (3) in die Mischkammer (21) umfassend, und wobei der Motor (41), der die Bewegung des Schlittens bewirkt, auch die Dosiereinheit (4) betätigt.

6. Getränkeherstellungsvorrichtung (1) nach Anspruch 5, wobei die Dosiereinheit (4) vom Motor (41) geöffnet wird, wenn der Schlitten (22b) des Kammeraufnahmebereichs vom Motor (41) in die Dosierposition bewegt wird.

7. Getränkeherstellungsverfahren, die folgenden Schritte umfassend:
- Bewegen einer Mischkammer (21) zur Herstellung eines Getränks aus einer löslichen Zutat und einem Verdünnungsmittel durch einen Motor (41) in eine Dosierposition, um die lösliche Zutat bereitzustellen, und dann in eine Getränkeherstellungsposition, um die Flüssigkeit bereitzustellen,
- Messen des Stroms des Motors (41) und Vergleichen des gemessenen Stroms mit einem vorgegebenen Schwellenwert, und
- Ausgeben eines Warnsignals, wenn der gemessene Strom den vorgegebenen Schwellenwert überschreitet.

## Revendications

1. Appareil de production de boissons (1), comprenant :
- une chambre de mélange (21) pour produire une boisson à partir d'un ingrédient de boisson soluble et d'un liquide,
- un élément coulissant (22b) pour servir de support à la chambre de mélange (21) et déplacer la chambre de mélange (21) entre une position de mesurage dans laquelle un ingrédient de boisson est distribué dans la chambre de mélange et une position de mélange dans laquelle l'ingrédient de boisson distribué est mélangé avec un diluant,
- une zone de réception de chambre (22a) pour recevoir la chambre de mélange (21), la zone de réception de chambre (22) et l'élément coulissant (22b) comprenant des moyens qui coopèrent pour faire coulisser l'élément coulissant (22b) par rapport à la zone de réception de chambre (22a),
- un moteur (41) pour actionner le mouvement de l'élément coulissant entre les positions de mesurage et de mélange,
l'appareil comprenant :
- une unité de détection de courant (13) pour mesurer le courant du moteur (41) et comparer le courant mesuré à une valeur de seuil prédéterminée et
- une unité d'alerte (14) pour émettre un signal d'alerte, lorsque le courant mesuré dépasse la valeur de seuil prédéterminée.

2. Appareil de production de boissons selon la revendication 1 dans lequel le signal d'alerte demande une opération de nettoyage de l'appareil.

3. Appareil de production de boissons selon la revendication 1 ou 2, dans lequel les moyens qui coopèrent pour faire coulisser l'élément coulissant (22b) par rapport à la zone de réception de chambre (22a) comprennent des bords (26) et des rainures (27).

4. Appareil de production de boissons (1) selon l'une quelconque des revendications précédentes, dans lequel la zone de réception de chambre (22a) peut être retirée de l'appareil de production de boissons (1).

5. Appareil de production de boissons (1) selon l'une quelconque des revendications précédentes, comprenant en outre une unité de dosage (4) pour distribuer une dose d'ingrédient de boisson soluble depuis un récipient d'ingrédient (3) dans la chambre de mélange (21) et dans lequel le moteur (41) destiné à actionner le mouvement de l'élément coulissant actionne également l'unité de dosage (4).

6. Appareil de production de boissons (1) selon la revendication 5, dans lequel, lorsque l'élément coulissant (22b) de la zone de réception de chambre est déplacé par le moteur (41) dans la position de dosage, l'unité de dosage (4) est ouverte par le moteur (41).

7. Procédé de production de boissons comprenant les étapes consistant à :
- déplacer une chambre de mélange (21) pour produire une boisson à partir d'un ingrédient soluble et d'un diluant au moyen d'un moteur (41) dans une position de dosage afin de fournir l'ingrédient soluble puis dans une position de production de boisson afin de fournir le liquide,
- mesurer le courant du moteur (41) et comparer le courant mesuré à une valeur de seuil prédéterminée et
- émettre un signal d'alerte, lorsque le courant mesuré dépasse la valeur de seuil prédéterminée.
